# FASCICULE DE BREVET EUROPEEN

(11) **EP 4 392 330 B1**
(45) Date de publication et mention de la délivrance du brevet: **18.12.2024**
(21) Numéro de dépôt: 23729803.9
(22) Date de dépôt: 12.05.2023
(51) Int. Cl.: B64G 1/50, B64G 1/66, B64G 1/58

(54) **EQUIPEMENT SPATIAL THERMORÉGULÉ À SOUTIEN MÉCANIQUE THERMIQUEMENT ISOLANT**
THERMISCH REGULIERTE RAUMAUSRÜSTUNG MIT THERMISCH ISOLIERENDER MECHANISCHER STÜTZE
THERMOREGULATED SPACE EQUIPMENT HAVING THERMALLY INSULATING MECHANICAL SUPPORT

(30) Priorité: 16.05.2022 FR 2204638
(43) Date de publication de la demande: 03.07.2024
(73) Titulaire: Airbus Defence and Space SAS, 31402 Toulouse Cedex 4 (FR); Centre National d'Etudes Spatiales, 75001 Paris (FR)
(72) Inventeur: LANGLET, Floriane, 31402 TOULOUSE CEDEX 4 (FR); CARPONCIN, Delphine, 31402 TOULOUSE CEDEX 4 (FR)
(74) Mandataire: Plasseraud IP
(86) Numéro de dépôt international: PCT/FR2023/050680
(87) Numéro de publication internationale: WO 2023/222966

(56) Documents cités:
- CN-A- 103 241 391
- CN-A- 105 667 837
- CN-A- 110 356 591
- CN-A- 111 891 389
- CN-A- 113 562 202
- CN-A- 114 084 382
- US-A1- 2018 057 190

## Description

### DOMAINE TECHNIQUE

La présente divulgation concerne un ensemble comprenant un équipement spatial thermorégulé et une ou plusieurs structures de soutien mécanique thermiquement isolantes.

### TECHNIQUE ANTERIEURE

Les engins spatiaux, tels que par exemple satellites artificiels, sondes, vaisseaux, peuvent comporter une charge utile comprenant un ou plusieurs équipements, comme des instruments optiques, des instruments de télécommunications, ou des capteurs, et une plate-forme sur laquelle sont montés les instruments, cette plate-forme assurant notamment un rôle de soutien mécanique.

Certains équipements, ou certains composants de ces équipements, doivent être thermorégulés pour permettre un fonctionnement optimal. C'est le cas par exemple d'un plan focal d'instrument optique, pouvant comprendre des détecteurs susceptibles de subir un accroissement de température lors de l'acquisition d'images, cet accroissement de température pouvant lui-même dérégler l'instrument et perturber la qualité des images acquises.

Pour ces équipements, la structure de soutien permettant de relier ces équipements à la plate-forme doit satisfaire à la fois une exigence de raideur mécanique élevée, pour assurer un découplage des contraintes mécaniques que pourrait induire la plate-forme sur l'équipement, et d'autre part assurer une isolation thermique de l'équipement thermorégulé par rapport à la plate-forme. On connaît notamment le brevet FR3040777 qui enseigne un ensemble de détection optique comportant une structure complexe utilisant une platine en céramique et une cale de réglage en céramique.

Ce type de technologie complexe est toutefois coûteux à fabriquer. Le document CN 111 891 389 A divulgue un ensemble comprenant un équipement spatial thermorégulé et au moins une structure de soutien mécanique de l'équipement spatial.

### RESUME

La présente divulgation vient améliorer la situation.

Il est proposé un ensemble comprenant un équipement spatial thermorégulé et au moins une structure de soutien mécanique comprenant une première portion métallique d'interface avec l'équipement, solidaire d'au moins une deuxième portion métallique d'interface avec une plateforme spatiale, ladite structure de soutien mécanique comprenant en outre au moins un maillage métallique formant une liaison mécanique entre lesdites première et deuxième portions d'interface, ladite structure de soutien mécanique comprenant également au moins un bloc de matériau mécaniquement rigide et thermiquement isolant reliant continûment et rigidement lesdites première et deuxième portions d'interface et comblant ledit maillage métallique.

Dans des modes de réalisation, le maillage comprend un agencement en trois dimensions d'une pluralité de tiges reliées entre elles de façon à former entre elles des interstices.

Dans des modes de réalisation, l'ensemble formé par la première portion d'interface, la deuxième portion d'interface et le maillage métallique est réalisé d'un seul bloc avec au moins une cloison de l'équipement spatial qui se prolonge par ladite première portion d'interface.

Dans des modes de réalisation, le métal ou alliage métallique formant ledit maillage et lesdites première et deuxième portions d'interfaces d'une part, et le bloc de matériau thermiquement isolant d'autre part, présentent des coefficients de dilatation thermique respectifs égaux à au plus 20 % près.

Dans des modes de réalisation, le maillage et les première et deuxième portions d'interfaces sont formés en alliage de titane, aluminium et vanadium ou en alliage de fer et nickel, par exemple composé à 64% de fer et 36% de nickel.

Dans des modes de réalisation, le bloc de matériau thermiquement isolant est constitué par une céramique ou du verre.

Dans des modes de réalisation, la structure de soutien mécanique définit un pied en V où la pointe du V est prolongée par ladite première portion d'interface prolongée par deux maillages métalliques en V jusqu'à deux deuxièmes portions d'interface, les maillages en V noyés au moins en partie dans le bloc de matériau thermiquement isolant formant deux liaisons mécaniques entre lesdites première et deuxièmes portions d'interface.

Dans des modes de réalisation, l'équipement est choisi parmi un instrument d'observation et un cryostat.

L'ensemble proposé comprend une structure de soutien mécanique permettant de satisfaire des exigences de raideur mécanique élevée et d'isolation thermique de l'équipement. La structure de soutien mécanique comprend à cet égard un bloc de matériau thermiquement isolant remplissant les interstices d'un maillage métallique. Le maillage métallique forme ainsi l'âme de la structure de soutien métallique, et permet de définir sa forme.

Dans des modes de réalisation, l'ensemble comprenant le maillage et les portions d'interface peut être réalisé par fabrication additive, ce qui rend possible la réalisation d'une grande diversité de formes et de dimensions. Par ailleurs, le fait de disposer d'un ensemble monobloc incluant le maillage et les portions d'interface permet de diminuer le nombre de manipulation lors de l'assemblage de l'engin spatial.

### DESCRIPTION DES FIGURES

D'autres caractéristiques, détails et avantages apparaîtront à la lecture de la description détaillée ci-après, et à l'analyse des dessins annexés, sur lesquels :
Fig. 1

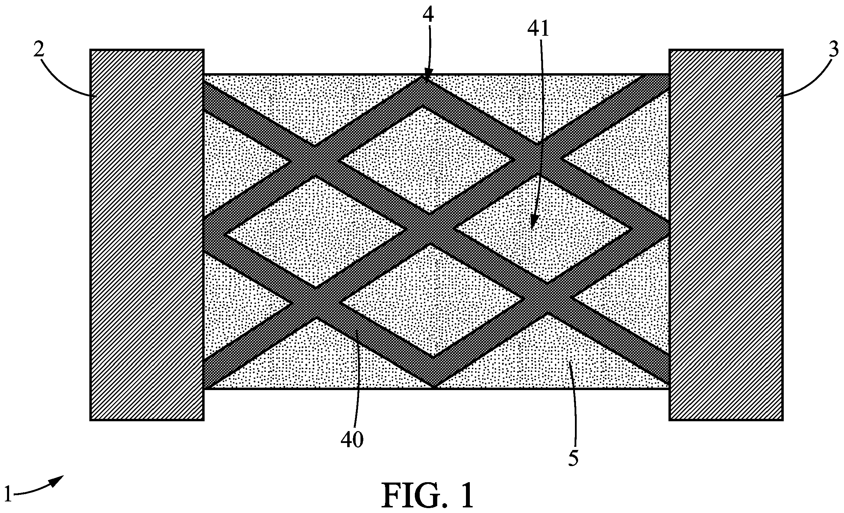

   [Fig. 1] représente schématiquement un exemple de structure de soutien mécanique.
Fig. 2

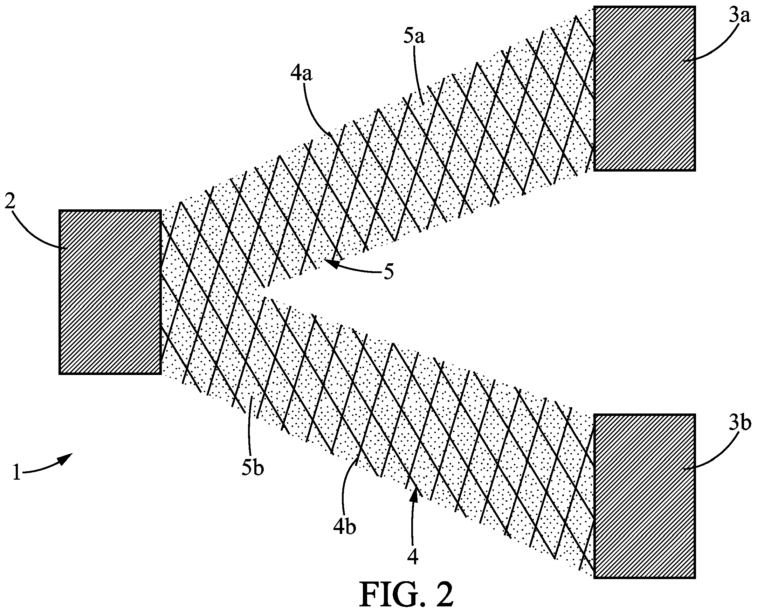

   [Fig. 2] représente schématiquement un autre exemple de structure de soutien mécanique.
**Fig. 3a**

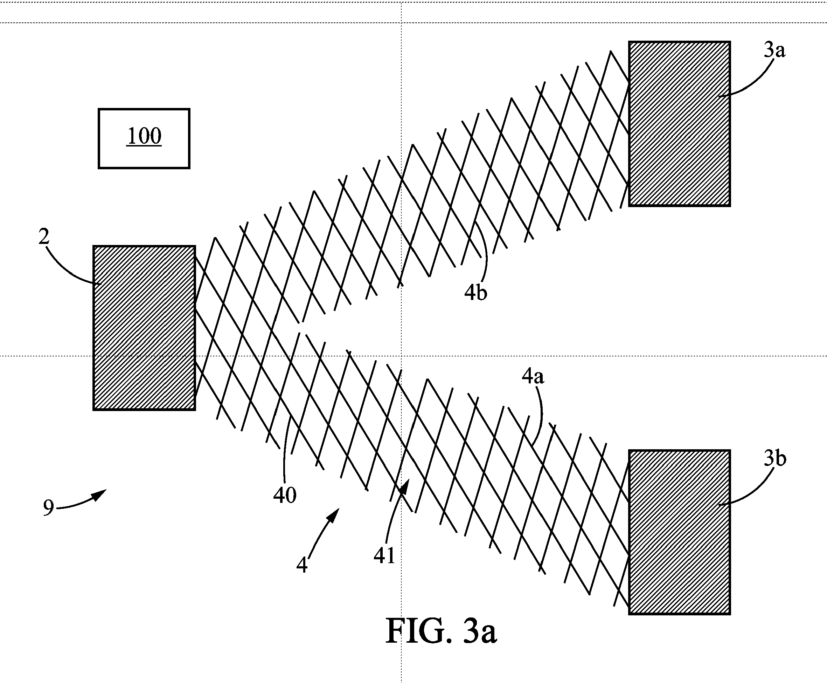

   [Fig. 3a], représente schématiquement une étape de fourniture d'un ensemble monobloc d'un procédé de fabrication d'une structure de soutien mécanique.
**Fig. 3b**

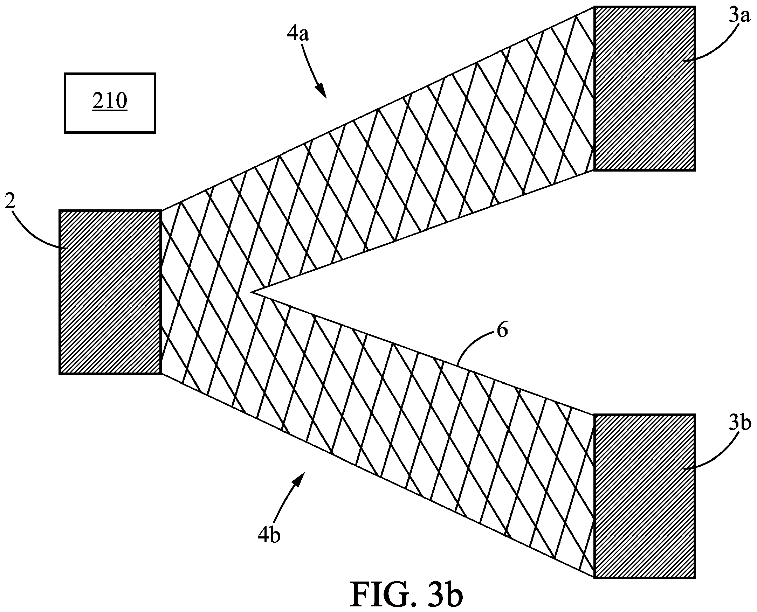

   [Fig. 3b] représente schématiquement une étape d'insertion du maillage de l'ensemble monobloc dans un moule lors d'un procédé de fabrication d'une structure de soutien mécanique.
**Fig. 3c**

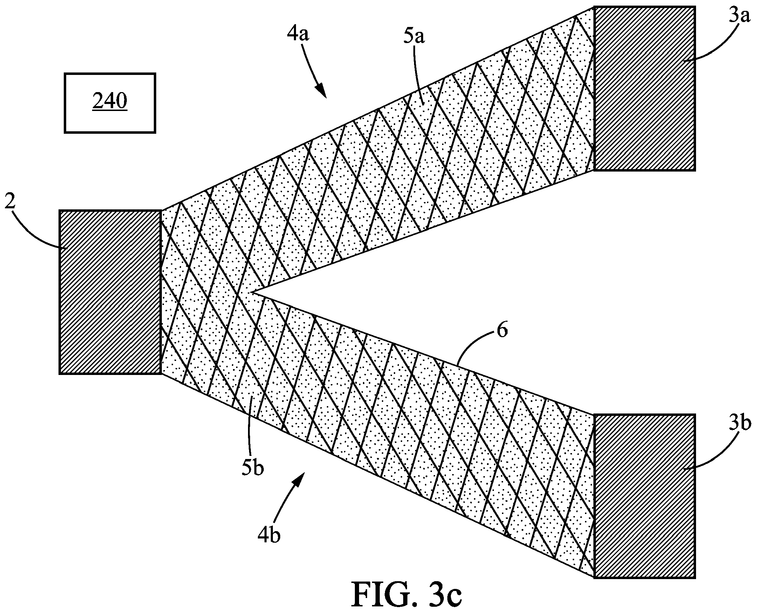

   [Fig. 3c] représente schématiquement une étape de coulage du matériau dans le maillage lors d'un procédé de fabrication d'une structure de soutien mécanique.
**Fig. 3d**

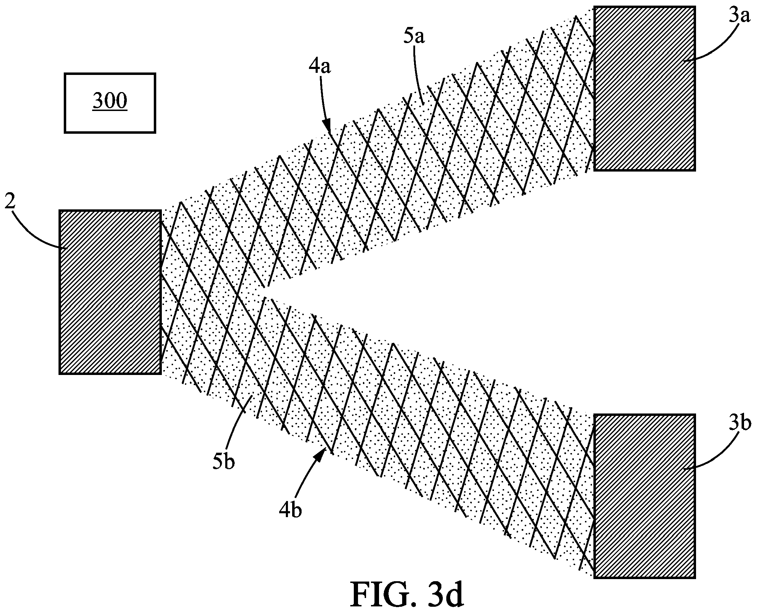

   [Fig. 3d] représente schématiquement une étape de retrait de l'ensemble monobloc du moule et de refroidissement pour obtenir la structure de soutien mécanique.
**Fig. 4**

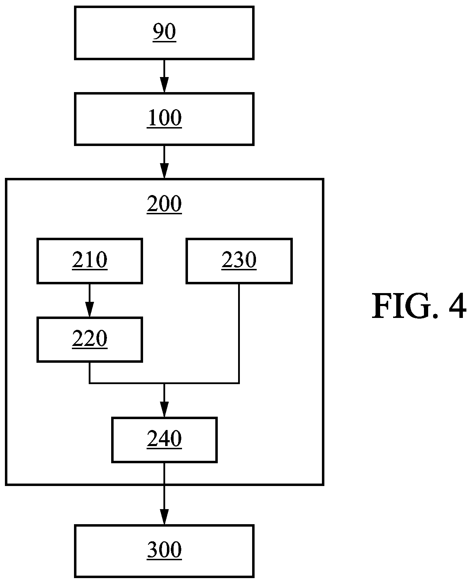

   [Fig. 4] représente schématiquement les principales étapes d'un procédé de fabrication d'une structure de soutien mécanique.
**Fig. 5**

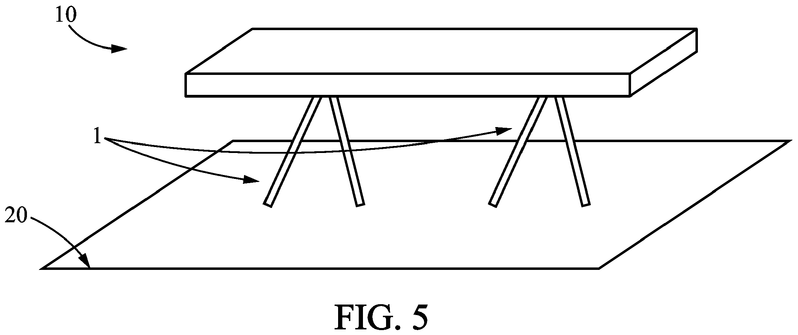

   [Fig. 5] représente schématiquement un exemple d'application d'un dispositif de support comprenant des structures de soutien mécanique à un plan focal d'instrument spatial.

### DESCRIPTION DES MODES DE REALISATION

On va maintenant décrire des exemples d'un ensemble comprenant un équipement spatial 10 thermorégulé et une ou plusieurs structures de soutien mécanique 1. L'équipement spatial thermorégulé 10 peut être par exemple un instrument d'observation, par exemple un télescope, comprenant un composant thermorégulé tel qu'un détecteur optique ou un plan focal. Alternativement, l'équipement spatial peut être tout équipement faisant l'objet d'une régulation thermique, par exemple un cryostat.

Cet équipement spatial thermorégulé 10 est embarqué dans un engin spatial comprenant une plateforme de support 20, en étant monté sur la plate-forme de support par l'intermédiaire d'au moins une structure de soutien mécanique 1. L'engin spatial peut par exemple être un satellite, une sonde, un vaisseau, une station spatiale, etc.

La structure de soutien mécanique 1 de l'équipement spatial comprend au moins une première portion d'interface 2 avec l'équipement 10, et au moins une deuxième portion d'interface 3 avec la plate-forme spatiale 20. Les deux portions d'interface 2, 3 sont réalisées en métal ou en alliage métallique, par exemple du titane ou un alliage à base de titane, comme par exemple un alliage à base de titane, aluminium et vanadium, ou encore un alliage de fer et nickel, par exemple un alliage constitué à 64% de fer et 36% de nickel connu sous la dénomination commerciale Invar. Dans un mode de réalisation, les première et deuxième portions d'interface 2,3 sont formées du même métal ou alliage métallique.

Dans un exemple de réalisation, une portion d'interface 2,3 avec l'équipement ou la plate-forme spatiale peut comprendre une platine comprenant des orifices traversants permettant une fixation par vis.

Dans un exemple de réalisation, une portion d'interface peut être une partie d'une cloison de l'équipement spatial ou d'une cloison de l'engin spatial embarquant l'équipement, ladite cloison étant alors prolongée par la portion d'interface correspondante.

La structure 1 de soutien mécanique comprend en outre un maillage métallique 4 établissant une liaison mécanique entre d'une part la ou les portions d'interface 2 avec l'équipement spatial et d'autre part la ou les portions d'interface 3 avec la plateforme. Le maillage métallique 4 peut être réalisé dans le même métal ou alliage métallique que les portions d'interface 2,3, et forme une liaison mécanique entre la première portion d'interface 2 et la deuxième portion d'interface 3. Le maillage 4 est avantageusement réalisé d'une seule pièce avec les portions d'interface 2,3, en étant dépourvu de charnière. Ainsi, dans un exemple de réalisation, l'ensemble monobloc 9 est réalisé d'une seule pièce avec une cloison de l'équipement spatial.

Le maillage 4 comprend un agencement en trois dimensions d'un ensemble de tiges 40 reliées entre elles de façon à définir entre elles des interstices 41 également tridimensionnels. Ces interstices 41 peuvent présenter une forme géométrique, par exemple être cubiques, tétraédriques ou hexaédriques selon la disposition des tiges du maillage, ou encore présenter une forme non géométrique et irrégulière. La dimension des interstices du maillage et le diamètre des tiges peut être variable en fonction de la taille de la structure de support, et des propriétés mécaniques recherchées pour cette structure. Par exemple la longueur d'une arête d'une maille du maillage peut être comprise entre quelques millimètres et quelques centimètres.

La forme du maillage 4 peut être variable en fonction du nombre de portions d'interface 2,3 et de la géométrie générale souhaitée pour la structure de soutien métallique. Dans un exemple illustré schématiquement sur la figure 1, la structure de soutien mécanique peut comprendre une portion d'interface 2 avec l'équipement 10 et une portion d'interface 3 avec la plate-forme spatiale 20. Dans ce cas, le maillage 4 peut s'étendre de façon sensiblement rectiligne entre les deux portions d'interface. En variante représentée sur la figure 2, la structure de soutien mécanique 1 peut comprendre une unique portion d'interface 2 avec l'équipement et deux ou trois portions d'interface 3 avec la plate-forme spatiale. Le maillage peut alors présenter une forme générale en V ou en trépied comprenant deux - respectivement trois - portions rectilignes 4a, 4b, formant un angle entre elles, chaque portion rectiligne reliant entre elles la portion d'interface 2 avec l'équipement et une portion d'interface 3a, 3b respective avec la plate-forme. La configuration inverse où la structure de soutien mécanique comprend une portion d'interface 3 avec la plate-forme et deux interfaces 2 ou plus avec l'équipement peut également être envisagée. Selon encore d'autres variantes, la structure peut comporter plusieurs portions d'interface 2 avec l'équipement et plusieurs portions d'interface 3 avec la plate-forme et le maillage peut présenter une forme de croix.

La structure de soutien mécanique 1 de l'équipement spatial comprend également un bloc 5 de matériau mécaniquement rigide et thermiquement isolant en appui mécanique contre les portions d'interface 2, 3 et comblant les interstices du maillage 4.

Le matériau constitutif du bloc est choisi pour pouvoir être inséré dans le maillage métallique 4 à l'état de poudre ou à l'état liquide pour pouvoir être fritté ou moulé, comme décrit plus en détails ci-après. Dans des modes de réalisation, le matériau constitutif du bloc est une céramique, par exemple de la zircone ou du verre, ce dernier pouvant par exemple être à composition aluminate ou silicate.

De plus, le matériau est avantageusement choisi pour présenter un coefficient de dilatation thermique proche de celui du métal ou de l'alliage métallique formant l'ensemble monobloc. Par exemple, mais non limitativement, les coefficients de dilatation thermique du matériau coulé et du matériau formant l'ensemble monobloc peuvent être choisis égaux à au plus 20%, par exemple à au plus 15% près, ou par exemple à au plus 11% près.

La ou les structures de soutien mécanique 1 peut ainsi former les pieds d'un équipement spatial. Les pieds peuvent être intégrés à l'équipement spatial ou rapportés. Les pieds intégrés à l'équipement spatial sont par exemple réalisés dans le prolongement d'une paroi de support ou dans le prolongement d'une paroi délimitant un espace fermé recevant un fluide de régulation thermique.

Deux exemples d'une telle structure de soutien mécanique 1 sont représentés sur la figure 1 et la figure 2.

L'exemple représenté sur la figure 1 est celui d'une structure comprenant une portion d'interface avec l'équipement 10 et une portion d'interface avec la plateforme 20, reliées entre elles par un maillage 4 linéaire.

L'exemple représenté sur la figure 2 est celui où la structure est un bipode comprenant une portion 2 d'interface avec l'équipement 10 et deux portions 3a, 3b d'interface avec la plateforme. Le maillage 4 relie la portion 2 avec chaque portion 3a, 3b et présente à cet effet une forme en V comprenant deux branches 4a, 4b rectilignes unies à une extrémité où elles sont solidaires de la portion 2, chaque branche étant solidaire à son extrémité opposée d'une portion 3a, 3b respective. Le bloc de matériau comblant le maillage présente la même forme.

En référence à la figure 5, un équipement spatial thermorégulé 10 peut comprendre une ou plusieurs structures de soutien mécanique 1 obtenues par le procédé décrit ci-avant, pour le relier à la plateforme 20. Par exemple, l'équipement peut être supporté par deux structures de soutien mécanique sous forme de bipode, comme décrit ci-avant en référence à la figure 1. Selon un autre exemple, un équipement spatial thermorégulé 10 peut comprendre une unique structure de soutien mécanique 1 sous la forme de tripode comprenant trois pieds reliés entre eux par une extrémité formée par la portion 2 d'interface avec l'équipement, les extrémités opposées des trois pieds étant formées par trois portions respectives d'interface avec la plate-forme.

En référence aux figures 3a à 3d et 4, on va décrire un exemple non limitatif de procédé de fabrication d'une structure de soutien mécanique 1 décrite ci-avant. Un tel procédé comprend la fourniture 100 d'un ensemble monobloc 9 de définition de la géométrie de la structure de soutien mécanique, dont un exemple est représenté schématiquement sur la figure 3a.

Cet ensemble monobloc comprend la ou les première(s) portion(s) d'interface 2 avec l'équipement 10, la ou les deuxième(s) portion(s) d'interface 3 avec la plate-forme spatiale 20, et le maillage métallique 4 reliant entre elles lesdites portions.

Dans un exemple de réalisation, une portion d'interface peut être une partie d'une cloison de l'instrument spatial ou d'une cloison de l'engin spatial embarquant l'instrument, ladite cloison étant alors prolongée par la portion d'interface correspondante. Par exemple, une première portion d'interface 2 avec l'instrument peut être une partie d'une cloison délimitant une cavité contenant un matériau caloporteur assurant une régulation thermique de l'instrument, comme par exemple une structure de transfert de chaleur a matériau diphasique, par exemple un caloduc.

L'ensemble monobloc 9 comprend en outre un maillage également métallique 4, pouvant être réalisé dans le même métal ou alliage métallique que les portions d'interface 2,3, et formant une liaison mécanique entre la première portion d'interface 2 et la deuxième portion d'interface 3. Le maillage 4 est avantageusement réalisé d'une seule pièce avec les portions d'interface 2,3, en étant dépourvu de charnière. Ainsi, dans un exemple de réalisation, l'ensemble monobloc 9 est réalisé d'une seule pièce avec une cloison de l'instrument spatial.

L'ensemble comprenant les portions d'interface 2, 3, et le maillage métallique 4 forme un ensemble 9 de définition de la géométrie de la structure de soutien mécanique 1, car la géométrie du maillage, en particulier sa largeur et sa profondeur entre deux portions d'interface, et la géométrie et les positions relatives des portions d'interface, définissent la géométrie de la structure obtenue à l'issue du procédé.

Cet ensemble monobloc 9 est avantageusement d'une seule pièce métallique. Il peut être fabriqué par fabrication additive, par exemple lors d'une étape préliminaire 90 du procédé.

Le procédé comprend ensuite la fabrication du bloc 5 de matériau mécaniquement rigide et thermiquement isolant remplissant les interstices du maillage 4.

Dans un exemple de réalisation, cette étape peut être réalisée par coulage du matériau constitutif du bloc en fusion dans le maillage, par exemple du verre. Le procédé comprend alors une étape 200 de coulage du matériau en fusion dans le maillage métallique et contre les première(s) 2 et deuxième(s) 3 portions d'interface. Le matériau dans ce cas est choisi pour présenter, à l'état de fusion, une viscosité suffisamment faible pour lui permettre de remplir les interstices du maillage et pour former un bloc mécaniquement rigide une fois refroidi. La taille des interstices du maillage est également déterminée en fonction du matériau qui est ensuite coulé à l'état de fusion dans les interstices du maillage de façon à combler ces interstices, et de la technique utilisée pour procéder au coulage..

Ainsi, après durcissement, le matériau coulé prend la forme d'un bloc 5 de matériau mécaniquement rigide et thermiquement isolant, en appui contre les portions d'interface et comblant le maillage, c'est-à-dire remplissant au moins en partie les interstices du maillage.

Le coulage 200 peut comprendre, en référence à la figure 3b, une étape préliminaire 210 de positionnement de l'ensemble monobloc dans un moule 6, dont les parois délimitent le contour de la structure de soutien mécanique à réaliser, et plus précisément les contours du bloc de matériau 5. Avantageusement, les parois du moule sont en appui contre les portions d'interface 2, 3 et s'étendent autour du contour extérieur du maillage 4. De fait, la forme du bloc de matériau 5 délimitée par le moule correspond à celle du maillage. Selon un exemple purement illustratif, et comme représenté sur les figures 3c et 3d, si la structure à réaliser est un bipode, avec un maillage présentant une forme en V, le bloc de matériau présente également une forme en V avec deux portions rectilignes 5a, 5b reliant la portion d'interface 2 avec respectivement chaque portion 3a, 3b. Dans certains cas, les parois du moule peuvent cependant être espacées du contour extérieur du maillage, par exemple d'une distance inférieure ou égale à la longueur des arêtes du maillage, ce qui correspond une fois le matériau durci à une portion circonférentielle autour du maillage et dépourvue de tiges du maillage.

L'ensemble monobloc 9, et le cas échéant le moule dans lequel il est placé en vue du coulage du verre, sont par ailleurs chauffés 220 dans un four, à une température inférieure à celle de fusion du verre, mais de préférence supérieure ou égale à la température de transition vitreuse du verre, par exemple entre 500 et 600°C, par exemple à 550°C. Cette étape de chauffage permet de réduire le choc thermique entre le verre et l'ensemble monobloc lors du coulage et ainsi permettre que le verre pénètre et comble l'ensemble des interstices du maillage.

Par ailleurs, le verre, après synthèse et refroidissement, est de préférence affiné avant d'être coulé, c'est-à-dire qu'il est chauffé 230 pour être débarrassé des bulles d'air qu'il peut contenir, et également pour le rendre liquide afin d'être coulé. Cette étape d'affinage et de fusion du verre peut être réalisée par exemple dans un autre four à une température supérieure à 800°C, par exemple de 1000°C ou plus.

Le coulage proprement dit du verre en fusion dans l'ensemble monobloc peut être réalisé par gravité ou par injection 240, après avoir sorti le verre d'une part, et l'ensemble monobloc d'autre part de leurs fours respectifs. Cette étape est représentée schématiquement en figure 3c. La structure comprenant l'ensemble monobloc positionné dans le moule et le verre comblant les interstices du maillage de l'ensemble monobloc sont ensuite replacés dans un four à la température de transition vitreuse du verre pour un recuit mécanique 250, permettant de relâcher les contraintes. La durée de ce recuit peut être d'au moins deux heures.

Puis le procédé comprend le refroidissement du matériau coulé 300 pour obtenir le bloc rigide. Pour cela, la structure est sortie du four pour refroidir progressivement à température ambiante. Le moule peut être avant ou après que la température de la structure a atteint la température ambiante. La structure obtenue après retrait du moule est représentée schématiquement sur la figure 3d.

Une fois le matériau coulé durci, la structure de soutien mécanique 1 est obtenue, présentant une raideur importante et permettant d'assurer l'isolation thermique de l'équipement spatial par rapport à la plate-forme, du fait de la faible surface relative des tiges constitutives du maillage par rapport au bloc de matériau thermiquement isolant.

## Revendications

1. Ensemble comprenant un équipement spatial (10) thermorégulé et au moins une structure de soutien mécanique (1) de l'équipement spatial (10), la structure (1) comprenant une première portion (2) métallique d'interface avec l'équipement (10), solidaire d'au moins une deuxième portion (3) métallique d'interface avec une plateforme spatiale (20), ladite structure de soutien mécanique comprenant en outre au moins un maillage métallique (4) formant une liaison mécanique entre lesdites première et deuxième portions (2,3) d'interface, **caractérisé en ce que** ladite structure de soutien mécanique (1) comprend également au moins un bloc de matériau (5) mécaniquement rigide et thermiquement isolant reliant continûment et rigidement lesdites première et deuxième portions (2, 3) d'interface et comblant ledit maillage métallique.

2. Ensemble selon la revendication 1, dans lequel ledit maillage (4) comprend un agencement en trois dimensions d'une pluralité de tiges (40) reliées entre elles de façon à former entre elles des interstices (41).

3. Ensemble selon la revendication 1 ou 2, dans lequel l'ensemble formé par la première portion (2) d'interface, la deuxième portion (3) d'interface et le maillage métallique (4) est réalisé d'un seul bloc avec au moins une cloison de l'équipement spatial (10) qui se prolonge par ladite première portion d'interface (2).

4. Ensemble selon l'une des revendications précédentes, où ledit maillage (4) et lesdites première (2) et deuxième (3) portions d'interfaces sont formés en alliage de titane, aluminium et vanadium ou en alliage de fer et nickel, par exemple composé à 64% de fer et 36% de nickel.

5. Ensemble selon l'une des revendications précédentes, dans lequel le bloc de matériau mécaniquement rigide et thermiquement isolant (4) est constitué par une céramique ou du verre.

6. Ensemble selon l'une des revendications précédente, dans lequel ladite structure de soutien mécanique (1) définit un pied en V où la pointe du V est prolongée par ladite première portion (2a) d'interface prolongée par deux maillages (5a, 5b) métalliques en V jusqu'à deux deuxièmes portions (3a, 3b) d'interface, les maillages en V noyés au moins en partie dans le bloc de matériau mécaniquement rigide et thermiquement isolant formant deux liaisons mécaniques entre lesdites première et deuxièmes portions d'interface.

7. Ensemble selon l'une des revendications précédentes, l'équipement étant choisi parmi un instrument d'observation et un cryostat.

## Patentansprüche

1. Anordnung aufweisend eine thermisch regulierte Raumausrüstung (10) und mindestens eine mechanische Stützstruktur (1) zum Stützen der Raumausrüstung (10), wobei die Struktur (1) einen ersten metallischen Schnittstellenabschnitt mit der Ausrüstung (10) aufweist, der mit mindestens einem zweiten metallischen Schnittstellenabschnitt (3) mit einer Raumplattform (20) verbunden ist, wobei die mechanische Stützstruktur ferner mindestens ein Metallnetz (4) aufweist, das eine mechanische Verbindung zwischen dem ersten und zweiten Schnittstellenabschnitt (2, 3) bildet,
**dadurch gekennzeichnet, dass** die mechanische Stützstruktur (1) außerdem mindestens einen mechanisch steifen und thermisch isolierenden Materialblock aufweist, der den ersten und zweiten Schnittstellenabschnitt (2, 3) kontinuierlich und starr verbindet und das Metallnetz füllt.

2. Anordnung nach Anspruch 1, in welcher das Netz (4) eine dreidimensionale Zusammenstellung mehrerer Stäbe (40) aufweist, die untereinander verbunden sind, um zwischen sich Zwischenräume (41) zu bilden.

3. Anordnung nach Anspruch 1 oder 2, in welcher die aus dem ersten Schnittstellenabschnitt (2), dem zweiten Schnittstellenabschnitt (3) und dem Metallnetz (4) gebildete Anordnung aus einem einzigen Block besteht, wobei mindestens eine Wand der Raumausrüstung (10) von dem ersten Schnittstellenabschnitt (2) verlängert wird.

4. Anordnung nach einem der vorstehenden Ansprüche, wobei das Netz (4) und der erste (2) und zweite (3) Schnittstellenabschnitt aus einer Legierung von Titan, Aluminium und Vanadium oder aus einer Legierung von Eisen und Nickel, beispielsweise zusammengesetzt aus 64% Eisen und 36% Nickel, hergestellt sind.

5. Anordnung nach einem der vorstehenden Ansprüche, in welcher der mechanisch steife und thermisch isolierende Materialblock (4) aus einer Keramik oder Glas besteht.

6. Anordnung nach einem der vorstehenden Ansprüche, in welcher die mechanische Stützstruktur (1) einen V-förmigen Fuß definiert, bei dem die Spitze des V durch den ersten Schnittstellenabschnitt (2a) verlängert ist, der durch zwei V-förmige Metallnetze (5a, 5b) bis zu zwei zweiten Schnittstellenabschnitten (3a, 3b) verlängert ist, wobei die V-förmigen Netze, die mindestens teilweise in dem mechanisch steifen und thermisch isolierenden Materialblock eingebettet sind, zwei mechanische Verbindungen zwischen dem ersten und zweiten Schnittstellenabschnitt bilden.

7. Anordnung nach einem der vorstehenden Ansprüche, wobei die Ausrüstung aus einem Beobachtungsinstrument und einem Kryostaten ausgewählt ist.

## Claims

1. Assembly comprising thermoregulated space equipment (10) and at least one mechanical support structure (1) for the space equipment (10), the structure (1) comprising a first metal portion (2) for interface with the equipment (10), integral with at least one second metal portion (3) for interface with a space platform (20), said mechanical support structure furthermore comprising at least one metal mesh (4) forming a mechanical connection between said first and second interface portions (2, 3), **characterised in that** said mechanical support structure (1) also comprises at least one block of mechanically rigid and thermally insulating material (5) continuously and rigidly connecting said first and second interface portions (2, 3) and filling in said metal mesh.

2. Assembly according to claim 1, wherein said mesh (4) comprises a three-dimensional arrangement of a plurality of rods (40) connected together so as to form interstices (41) between them.

3. Assembly according to claim 1 or 2, wherein the assembly formed by the first interface portion (2), the second interface portion (3) and the metal mesh (4) is produced in a single block with at least one partition of the space equipment (10) that is extended by said first interface portion (2).

4. Assembly according to one of the preceding claims, wherein said mesh (4) and said first (2) and second (3) interface portions are formed from titanium, aluminium and vanadium alloy or from iron and nickel alloy, for example composed of 64% iron and 36% nickel.

5. Assembly according to one of the preceding claims, wherein the block of mechanically rigid and thermally insulating material (4) is formed by a ceramic or glass.

6. Assembly according to one of the preceding claims, wherein said mechanical support structure (1) defines a V-shaped foot where the point of the V is extended by said first interface portion (2a) extended by two V-shaped metal meshes (5a, 5b) as far as two interface portions (3a, 3b), the V-shaped meshes at least partly embedded in the block of mechanically rigid and thermally insulating material forming two mechanical connections between said first and second interface portions.

7. Assembly according to one of the preceding claims, the equipment being selected from an observation instrument and a cryostat.
